Europäisches Patentamt

European Patent Office

Office européen des brevets

(11) Publication number: **0 174 021**
A2

# (12) EUROPEAN PATENT APPLICATION

(21) Application number: 85111175.7

(22) Date of filing: 04.09.85

(51) Int. Cl.⁴: **G 05 B 13/04**
**G 03 C 1/02**

(30) Priority: 05.09.84 JP 186680/84

(43) Date of publication of application:
12.03.86 Bulletin 86/11

(84) Designated Contracting States:
DE GB NL

(71) Applicant: KONISHIROKU PHOTO INDUSTRY CO. LTD.
No. 26-2, Nishishinjuku 1-chome Shinjuku-ku
Tokyo 160(JP)

(72) Inventor: Saito, Masanori
2-5-19, Ohwada-Machi
Hachioji-Shi Tokyo(JP)

(74) Representative: Henkel, Feiler, Hänzel & Partner
Möhlstrasse 37
D-8000 München 80(DE)

(54) Optimum control method for photographic emulsion manufacturing process.

(57) An optimum control method for a photographic emulsion manufacturing process wherein the set U (k) of a plurality of process inputs, the set X (k) of a plurality of states, the set $U_M$ (k) of a plurality of manipulated variables applied to the process, the set $U_c$ (k) of a plurality of manipulated variables applied to the process, the set $Y_M$ (k) of a plurality of target value patterns, defining the set U' (k) of a plurality of input variables, a plant model F (k) which is represented by a set of a plurality elements which satisfy the condition of F (k) = 0, and defining an evaluation function J (k) are defined, so that manipulated variables $U_c$ which minimize the evaluation function J (k) is calculated, and that the manipulated variables is applied to the plant (2).

## OPTIMUM CONTROL METHOD FOR PHOTOGRAPHIC EMULSION MANUFACTURING PROCESS

The present invention relates to an optimum control method for a photographic emulsion manufacturing process. More particularly, the invention pertains to an optimum control method for a photographic emulsion manufacturing process which involves a multiplicity of variables such as the potential or concentration of silver in the solution.

Photographic emulsions which are employed for photosensitive materials, such as photographic paper and film, generally include silver halide as a principal component. Silver halide is a compound of a halogen, such as $Br$, and silver, and is widely used as a material for photographic emulsions. Such silver halide is produced by crystallization in which silver nitrate ($AgNO_3$) and potassium bromide (KBr) or potassium iodide (KI) or sodium chloride (NaCl) are added together such that they react to crystallize silver halide.

In this type of reaction crystallization step, it is not possible to directly measure the degree of crystal growth of silver halide itself. For this reason, it is conventional practice to estimate the degree of growth of silver halide from the silver concentration in the solution which is related to the growth of silver halide.

In the process of crystal growth of silver halide, a considerable number of operations in the control of crystal growth are conducted based on the operator's experience, since some of the mechanism of the crystal growth has not yet been satisfactorily elucidated. Further, in the crystal growth process of the above-described type, the growth of crystals of silver halide is affected by various factors, such as the solution temeprature and the rate of stirring, in addition to the silver concentration and the halogen concentration in the solution. A change in even one of these process variates affects the other variates. In such a control (multivariable control) in which a change in one of the process variates affects the other variates, it is not possible according to the conventional PID control to effect control in such a manner that process variates as objects of measurement are measured, and the respective manipulated variables of the measured variates are simultaneously and automatically controlled so that each controlled variable coincides with a desired value. In addition, such a control system involves a disadvantageously low degree of stability and inferior response characteristics of the controlled variable in the control of each pair of controlled and manipulated variables due to the correlations between the controlled and manipulated variables.

In view of the above-described circumstances, it is a primary object of the present invention to realize an optimum control method which provides excellent stability and response characteristics in a multivariable control process such as a photographic emulsion manufacturing process.

To this end, the present invention provides an optimum control method for a photographic emulsion manufacturing process which comprises: defining the set $U(k)$ of a plurality of process inputs as follows:

$$U(k) = [U_1(k), \ldots U_n(k)]^T$$

$$= [U_M^T(k), U_C^T(k)]^T$$

defining the set $X(k)$ of a plurality of states as follows:

$$X(k) = [X_1(k), \ldots, X_m(k)]^T$$

defining the set $U_M$ (k) of a plurality of manipulated variables applied to the process as follows:

$$U_M (k) = [U_{M,1} (k), \ldots, U_{M,n-s} (k)]^T$$

defining the set $U_C$ (k) of a plurality of manipulated variables applied to the process as follows:

$$U_C (k) = [U_{C,1} (k), \ldots, U_{C,s} (k)]^T$$

defining the set $Y_M$ (k) of a plurality of target value patterns as follows:

$$Y_M (k) = [Y_{M,1} (k), \ldots, Y_{M,s} (k)]^T$$

and defining the set $U'$ (k) of a plurality of input variables as follows:

$$U' (k) = U (k), U (k-1), \ldots, U (k-\ell_u-\ell_y)]$$

forming a plant model $F$ (k) which is represented by a set of a plurality elements which satisfy the condition of $F$ (k) = O (where O is a column vector which consists of s rows and one column and in which all matrix elements are 0), the set of elements being expressed by the following formula:

$$F (k) = \begin{bmatrix} f_1 (X (k-\ell y), U' (k), X (k+\ell u+1)) \\ \vdots \qquad \vdots \qquad \vdots \\ f_s (x (k-\ell y), U' (k), X (k+\ell u+1)) \end{bmatrix}$$

defining an evaluation function J (k) expressed by the following formula:

$$J(k) = J_1^T(k) \cdot Q(k) \cdot J_1(k)$$
$$+ J_2^T(k) \cdot R(k) \cdot J_2(k)$$

where

$$J_1(k) = \begin{bmatrix} f_1(\hat{X}(k-\ell y), U'(k), \hat{x}_R(k+\ell u+1)) \\ \vdots \qquad \vdots \qquad \vdots \\ f_s(\hat{X}(k-\ell y), U'(k), \hat{x}_R(x+\ell u+1)) \end{bmatrix}$$

$$J_2(k) = G[U(k) - \alpha \cdot U(k-1)]$$

$$Q(k) = \text{diag}[Q_1(k), \dots, Q_s(k)]$$

$$R(k) = \text{diag}[R_1(k), \dots, R_n(k)]$$

calculating manipulated variables $U_C$ which minimize the evaluation function $J(k)$; and applying the manipulated variables to the plant.

In other words, according to the present invention, phenomena in the plant are represented by numerical formulae, and a plurality of controlled variables, such as the potential of silver and the pH value, are controled on the basis of the formulated model, thereby optimal controlling the crystal growth process in which a plurality of elements have effects on the growth of silver particles.

The above and other objects, features and advantages of the present invention will become apparent from the following description taken in conjunction with the accompanying drawings.

Fig. 1 is a block diagram of one example of a photographic emulsion manufacturing process for carrying out the present invention;

Figs. 2(a), 2(b) show control patterns employed when the present invention is applied to the process shown in Fig. 1;

Fig. 3 is a flow chart showing the states of various inputs and outputs in the photographic emulsion manufacturing process; and

Fig. 4 is a block diagram of another example of the photographic emulsion manufacturing process for carrying out the present invention.

The present invention will be described hereinunder in detail with reference to the accompanying drawings.

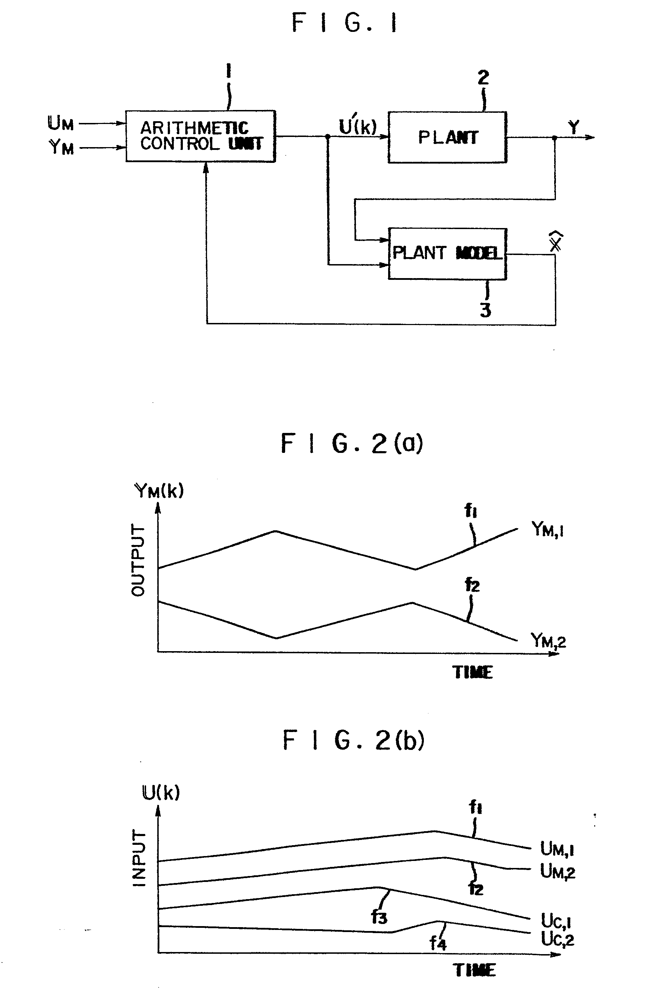

Fig. 1 is a block diagram of one example of the photographic emulsion manufacturing process for carrying out the present invention.

In the Figure, the reference numeral 1 denotes an arithmetic control unit which receives a plurality of patterned manipulated variables $U_M(k)$, a plurality of control target values $Y_M(k)$ and a plurality of state quantity signals $X(k)$, subjects them to various calculations and outputs manipulated variables $U'(k)$ which enable the system to be run in an optimum operative state. The signal "k" added to each of the sets represents discrete time (that is, a discontinuous flow of time). As the arithmetic control unit 1, for example, a computer or a microcomputer may be employed. The numeral 2 denotes a real plant which grows crystals of silver halide. The manipulated variables $U'(k)$ obtained as the result of the arithmetic operation carried out by the control unit 1 are applied to the real plant 2 and act in such a manner as to maintain controlled variables (e.g., the silver concentration or potential in the solution and the pH value thereof) in the plant 2 at constant levels.

Process variates $Y(k)$ (e.g., the silver potential and the pH value) obtained as the result of the control are obtained from the plant 2. A plant model 3 receives the output $Y(k)$ of the plant 2 and the output $U(k)$ of the arithmetic control unit 1. This plant model 3 consists of a set of a plurality of arithmetic formulae. The plant model 3 generates a plurality of state quantity signals $X(k)$ which are applied to the arithmetic control circuit 1. The present invention will now be described in detail by employing the thus arranged process.

The set $U$ (k) of a plurality of process inputs, such as the flow rate of silver nitrate, is expressed by the following formula:

$$U (k) = [ U_1 (k), \ldots, U_n (k) ]^T \quad (1)$$

$$= [ U_M^T (k), U_C^T (k) ]^T \quad (2)$$

where T is a signal which represents a transposed matrix.

The matrix elements $U_1$ (k), $\ldots$ , $U_n$ (k) expressed in the formula (1) respectively represent inclusive input elements and may be expressed by a column vector which consists of $\underline{n}$ rows and one column. The matrices $U_M^T$ (k) and $U_C^T$ (k) expressed in the formula (2) represent practical inputs. The matrix $U_M^T$ (k) is a set of pattern data which are taken out from a data base incorporated in the computer and are most suitable for use in the photographic emulsion manufacturing process. This set of pattern data is input to the arithmetic control unit 1 as patterned manipulated variables. The matrix $U_C^T$ (k) is a set of manipulated variables which minimize the evaluation function J (k) which will be described later. This set of manipulated variables is applied to the plant 2. As these manipulated variables, for example, KBr and the amount of addition of acetic acid are employed. $U_M^T$ (k) and $U_C^T$ (k) are respectively expressed by the

following formulae:

$$U_M (k) = [ U_{M,1} (k), \ldots , U_{M,n-s} (k)]^T \quad (3)$$

$$U_C (k) = [ U_{C,1} (k), \ldots , U_{C,s} (k)]^T \quad (4)$$

In the above formulae, the set $U_C$ (k) of manipulated variables is a column vector which consists of $\underline{s}$ rows and one column and is represented by $\underline{s}$ elements. The set $U_M$ (k) of manipulated variables is a column vector which consists of (n-s) rows and one column and is represented by (n-s) elements, where $\underline{n}$ is the total number of input elements expressed in the formula (1), and $\underline{s}$ is the number of manipulated variables $U_C$ (k).

The output Y (k) of the plant 2 is expressed by the following formula:

$$Y (k) = [Y_1 (k), \ldots , Y_s (k)]^T \quad (5)$$

In the above formula, Y (k) is a column vector which consists of $\underline{s}$ rows and one column in a manner similar to that of $U_C$ (k).

The set X (k) of a plurality of states, such as the silver halide concentration, is expressed by the following formula:

$$X (k) = [X_1 (k), \ldots , X_m (k)]^T \quad (6)$$

In the above formula, the set X (k) of state quantities is a column vector which consists of $\underline{m}$ rows and one column and is expressed by $\underline{m}$ elements. The variables $X$ (k) are output from the plant model 3.

The set $Y_M$ (k) of a plurality of target values, such as the silver potential, is expressed by the following formula:

$$Y_M \ (k) = [Y_{M,1} \ (k), \ \dots \ , \ Y_{M,s} \ (k)]^T \qquad (7)$$

The set $Y_M$ (k) of target values is a column vector which consists of $\underline{s}$ rows and one column and which is represented by $\underline{s}$ elements. These elements are previously obtained by experiments or from experience. The set $Y_M$ (k) of target values is applied to the arithmetic control unit 1.

The set $U'$ (k) of a plurality of input variables including changes with time is expressed by the following formula:

$$U' \ (k) = [U \ (k), \ U \ (k-1), \ \dots \ , \ U \ (k-\ell u -\ell y)] \qquad (8)$$

In the above formula, $\ell u$ represents the input dead time, while $\ell y$ represents the output dead time. For example, when KBr or the like is added to a solution containing silver nitrate, the solution is stirred so that the system becomes uniform. The time required for this stirring constitutes a lag (dead time) in relation to the system. For this reason, to effect an optimum control, it is necessary for the effect

- 11 -

0174021

of such dead time to be taken into consideration.

The following is consideration of a plant model $\mathbb{F}$ (k) for producing silver halide.  It is now assumed that the plant model $\mathbb{F}$ (k) is represented by a set of a plurality of elements which satisfy the condition of

$$\mathbb{F} \text{ (k)} = \mathbb{0} \qquad (9)$$

the set of elements being expressed by the following formula:

$$\mathbb{F} \text{ (k)} = \begin{bmatrix} f_1 \text{ (}\mathbb{X} \text{ (k}-\ell y), \text{ } \mathbb{U}' \text{ (k), } \mathbb{X} \text{ (k}+\ell u+1)) \\ \vdots \qquad \vdots \qquad \vdots \\ f_s \text{ (}\mathbb{x} \text{ (k}-\ell y), \text{ } \mathbb{U}' \text{ (k), } \mathbb{X} \text{ (k}+\ell u+1)) \end{bmatrix} \qquad (10)$$

In the above formula: $f_1$ to $f_s$ respectively represent functions of the vector and matrix elements in the parentheses (e.g., the silver concentration in the solution); $\mathbb{U}'$ (k) represents the input variables defined by the formula (7) (e.g., the flow rate of silver nitrate); and $\mathbb{X}$ (k+$\ell$u+1) represents an estimated concentration in the solution in the subsequent step.

An evaluation function  J (k)  such as that given by the following formula will now be considered:

$$J \text{ (k)} = \mathbb{J}_1^T \text{ (k)} \cdot \mathbb{Q} \text{ (k)} \cdot \mathbb{J}_1 \text{ (k)}$$
$$+ \mathbb{J}_2^T \text{ (k)} \cdot \mathbb{R} \text{ (k)} \cdot \mathbb{J}_2 \text{ (k)} \qquad (11)$$

In the above formula: $\mathbb{J}_1$ (k) represents the plant model expressed by the formula (9); $\mathbb{Q}$ (k) and $\mathbb{R}$ (k)

represent weights; and $J_2$ (k) represents a model which shows changes in the process variates. $J_1$ (k), $J_2$ (k), $Q$ (k) and $R$ (k) are respectively defined as follows:

$$J_1 (k) = \begin{bmatrix} f_1 \ (\hat{X} \ (k-\ell y), \ U' \ (k), \ \hat{X}_R \ (k+\ell u+1)) \\ \vdots \qquad \vdots \qquad \vdots \\ f_s \ (\hat{X} \ (k-\ell y), \ U' \ (k), \ \hat{X}_R \ (k+\ell u+1)) \end{bmatrix} \quad (12)$$

$$J_2 (k) = G \left[ U (k) - \alpha \cdot U (k-1) \right. \qquad (13)$$

$$Q (k) = \text{diag} \ [Q_1 (k), \ \dots \ , Q_s (k)] \qquad (14)$$

$$R (k) = \text{diag} \ [R_1 (k), \ \dots \ , R_n (k)] \qquad (15)$$

In the above formula: "$\wedge$" put to X in the formula (12) is a symbol which represents an estimate; "R" of $X_R$ is a symbol which represents a reference. The symbol "diag" is the formula (14) and (15) represents a diagonal matrix. The first term on the right-hand side of the formula (11) is the system model itself, while the second term works in such a manner that, when changes in the process variates are expressed by the formula (13), the second term minimizes the changes in the process variates or causes the flow rate in the process to be minimized.

G in the formula (13) is a function for correcting the input limitation of the plant and expressed by

$$G = \frac{\Delta V\ (k)\ \cdot\ \Delta t}{A}$$

where $\Delta V\ (k) = U\ (k) - \alpha \cdot U\ (k - 1)$;

$\underline{A}$ is a value determined by the controlled variables and the process variables and, for example, 1 or 2; and $\Delta t$ is a unit time.

In the above formulae, $\alpha$ is a matrix indicating the weight ranking with respect to the change of the process variables of the plant; and

$J_2$ may be expressed merely as

$$J_2\ (k) = U\ (k) - U\ (k-1).$$

Thus, the steps in the process shown in Fig. 1 are respectively expressed by the numerical formulae as described above, and input variables $U'\ (k)$ which minimize the evaluation function $J\ (k)$ expressed by the formula (11) are obtained by arithmetic operations which are carried out by the arithmetic control unit 1. More specifically, the set $X$ (k) of estimates, such as the silver concentration in the solution, are obtained from the plant model 3 and applied to the arithmetic control unit 1 where a feed-forward control is effected in such a manner that the set $X$ (k) of estimates equals the set $Y_M$ (k) of target values. More specifically, the arithmetic control unit 1 obtains $U'$ (k) which minimizes the evaluation function $J$ (k) and then obtains the set of manipulated variables $U_C$ (k) corresponding to the obtained $U$ (k). The thus obtained manipulated variables $U_C$ (k) are applied to the real plant 2, whereby the process of crystal growth of silver halide is optimal controlled. As an element of the set $U_C$ (k) of manipulated variables, for example, KBr, described hereinbefore, is employed and fed to the plant 2 as an input variable.

Fig. 2 shows control patterns employed when the present invention is applied to the process shown in Fig. 1. In the case of the example shown in Fig. 2, $n$ is four and $s$ is two. The axis of ordinate of the graph in Fig. 2(a) represents $Y_M$, that is, the target values (outputs) of the controlled variables, and that of the graph 2(b) represents the process inputs $U$ (k).

The axis of abscissa of each of the graphs represents time. In the graph 2(a), $f_1$ and $f_2$ respectively represent elements $Y_{M,1}$ and $Y_{M,2}$, which correspond, for example, to the potential of silver and the pH value, respectively. In the graph 2(b), $f_1$, $f_2$, $f_3$ and $f_4$ respectively represent $U_{M,1}$, $U_{M,2}$, $U_{C,1}$ and $U_{C,2}$, which respectively correspond, for example, to the flow rate of $AgNO_3$, the flow rate of KBr+KI, the manipulated variable of KBr and the manipulated variable of HAC.

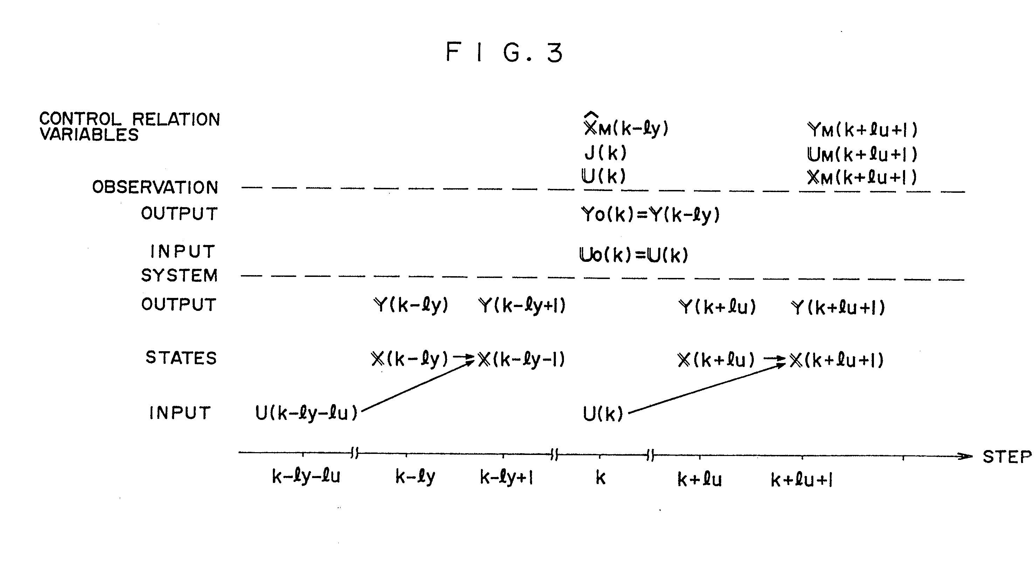

Fig. 3 is a flow chart of the states of various inputs and outputs according to the present invention in which the dead time is taken into consideration. The ordinate is divided into sections which respectively show control relation variables, observation inputs and outputs, system input and outputs, and states. The abscissa represents steps (the discrete flow of time). The formulae shown in the Figure respectively represent matrices. $U_0$ (k) and $Y_0$ (k) respectively represent the set of observation input values and the set of observation output values.

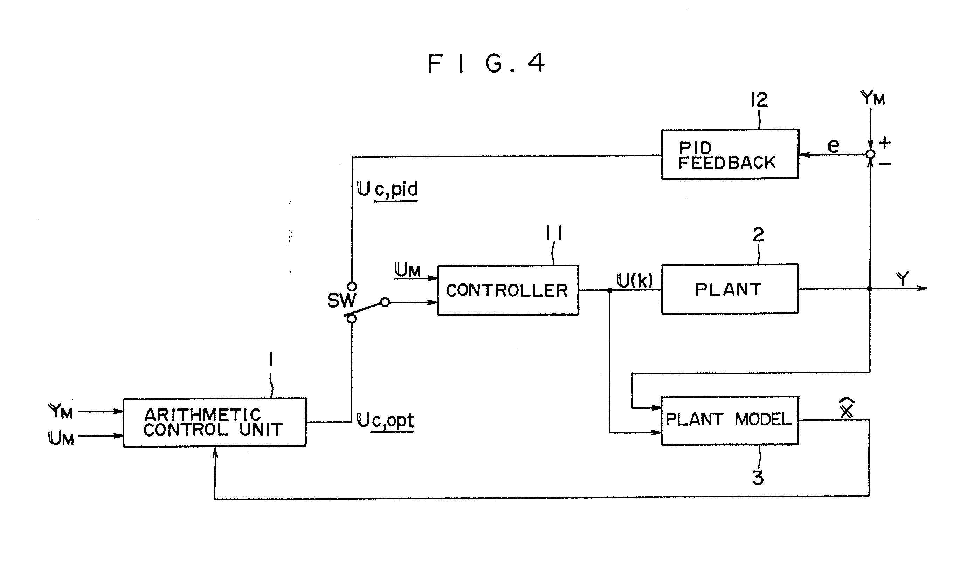

Fig. 4 is a block diagram of another example of the photographic emulsion manufacturing process for carrying out the present invention, in which the same members as those shown in Fig. 1 are denoted by the same reference numerals. In Fig. 4: the numeral 11 represents a controller which receives either one of the manipulating signals $U_{C,pid}$ and $U_{C,opt}$ and the input signal $U_M$; the symbol SW denotes a changeover switch which selects either one of the manipulating signals $U_{C,pid}$ and $U_{C,opt}$ such that the selected signal is delivered to the controller 11; and the numeral 12 represents a PID type feedback element which receives the signal $e$ which indicates the difference between the set of target values $Y_M$ and the set of measured values (outputs) $Y$. The arithmetic control unit 1 outputs the optimum manipulating signal $U_{C,opt}$ which has been obtained by the arithmetic operation, the signal being applied to the plant 2. The feedback element 12 generates the manipulating signal $U_{C,pid}$ obtained by the PID operation, the signal being applied to the plant 2 through the controller 11. The operation of the system thus arranged will be described hereinunder.

In a normal operative state, the switch SW is connected to the arithmetic control unit 1, as illustrated, and the system shown in Fig. 4 effects an optimum control operation employing the control method according to the present invention in a manner similar to that of the system shown in Fig. 1. When it becomes impossible to effect optimum control, due to a failure of the CPU which executes the operation, the switch SW is automatically changed over to feedback element 12. In consequence, the illustrated system effects an ordinary PID control by the loop which is formed by the feedback element 12 → the controller 11 → the plant 2 → the feedback element 12. Thus, the system is prevented from being undesirably suspended.

As has been described in detail, it is possible according to the present invention to realize an optimum control method which provides excellent stability and response characteristics in a multivariable control process, such as a photographic emulsion manufacturing process, by representing states or phenomena in the process by numerical formulae and effecting arithmetic control by means of the formulated model.

CLAIMS:

1. An optimum control method for a photographic emulsion manufacturing process, said method comprising:

defining the set $U(k)$ of a plurality of process inputs as follows:

$$U(k) = [U_1(k), \ldots U_n(k)]^T$$
$$= [U_M^T(k), U_C^T(k)]^T$$

defining the set $X(k)$ of a plurality of states as follows:

$$X(k) = [X_1(k), \ldots, X_m(k)]^T$$

defining the set $U_M(k)$ of a plurality of manipulated variables applied to said process as follows:

$$U_M(k) = [U_{M,1}(k), \ldots, U_{M,n-s}(k)]^T$$

defining the set $U_C(k)$ of a plurality of manipulated variables applied to said process as follows:

$$U_C(k) = [U_{C,1}(k), \ldots, U_{C,s}(k)]^T$$

defining the set $Y_M(k)$ of a plurality of target value patterns as follows:

$$Y_M(k) = [Y_{M,1}(k), \ldots, Y_{M,s}(k)]^T$$

and defining the set $U'(k)$ of a plurality of input variables as follows:

$$U'(k) = [U(k), U(k-1), \ldots, U(k-\ell u-\ell y)]$$

forming a plant model $F(k)$ which is represented by a set of a plurality elements which satisfy the condition of $\mathbb{F}(k) = 0$, the set of elements being expressed by the following formula:

$$\mathbb{F}(k) = \begin{bmatrix} f_1(X(k-\ell y),\ \mathbb{U}'(k),\ X(k+\ell u+1)) \\ \vdots \qquad \vdots \qquad \vdots \\ f_s(x(k-\ell y),\ \mathbb{U}'(k),\ X(k+\ell u+1)) \end{bmatrix}$$

defining an evaluation function $J(k)$ expressed by the following formula:

$$J(k) = \mathbb{J}_1^{\ T}(k) \cdot \mathbb{Q}(k) \cdot \mathbb{J}_1(k) + \mathbb{J}_2^{\ T}(k) \cdot \mathbb{R}(k) \cdot \mathbb{J}_2(k)$$

where

$$\mathbb{J}_1(k) = \begin{bmatrix} f_1(\hat{X}(k-\ell y),\ \mathbb{U}'(k),\ \hat{X}_R(k+\ell u+1)) \\ \vdots \qquad \vdots \qquad \vdots \\ f_s(\hat{X}(k-\ell y),\ \mathbb{U}'(k),\ \hat{X}_R(k+\ell u+1)) \end{bmatrix}$$

$$\mathbb{J}_2(k) = \mathbb{G}[U(k) - U(k-1)]$$

$$\mathbb{Q}(k) = \operatorname{diag}[Q_1(k),\ \dots,\ Q_s(k)]$$

$$\mathbb{R}(k) = \operatorname{diag}[R_1(k),\ \dots,\ R_n(k)]$$

calculating manipulated variables $U_C$ which minimize said evaluation function $J(k)$; and

applying said manipulated variables to a plant (2), where $\mathbb{G}$ is a function for correcting an input limitation applied on the plant (2) and $\mathbb{J}_2(k)$ is $\mathbb{U}(k) - U(k-1)$.

2. A method according to Claim 1, wherein

$$J_2 (k) = G \left[ U (k) - Q \cdot U (k-1) \right] = \left[ U (k) - U (k-1) \right] .$$

F I G. I

F I G. 2 (a)

F I G. 2 (b)

## F I G. 3

CONTROL RELATION VARIABLES

$\hat{X}_M(k-\ell y)$      $Y_M(k+\ell u+l)$

$J(k)$      $U_M(k+\ell u+l)$

$U(k)$      $X_M(k+\ell u+l)$

OBSERVATION — — — — — — — — — — — — — — — — — — — — — — —

OUTPUT      $Y_0(k)=Y(k-\ell y)$

INPUT      $U_0(k)=U(k)$

SYSTEM — — — — — — — — — — — — — — — — — — — — — — —

OUTPUT    $Y(k-\ell y)$    $Y(k-\ell y+l)$     $Y(k+\ell u)$    $Y(k+\ell u+l)$

STATES    $X(k-\ell y) \rightarrow X(k-\ell y-l)$     $X(k+\ell u) \rightarrow X(k+\ell u+l)$

INPUT   $U(k-\ell y-\ell u)$         $U(k)$

STEP →

$k-\ell y-\ell u$    $k-\ell y$    $k-\ell y+l$    $k$    $k+\ell u$    $k+\ell u+l$

# F I G . 4